# EUROPEAN PATENT APPLICATION

(11) **EP 4 372 225 A1**
(43) Date of publication of application: **22.05.2024**
(21) Application number: 22207750.5
(22) Date of filing: 16.11.2022
(51) Int. Cl.: F03D 7/04

(54) **METHOD AND SYSTEM FOR WIND SPEED DETERMINATION USING RPM AND BLADE PITCH ANGLE**

(71) Applicant: Ventus Engineering GmbH, 1110 Vienna (AT)
(72) Inventor: MINGALIEV, Shavkat, 1010 Wien (AT); LÜBKER, Poul Anker Skaarup, 6340 Baar (CH); TOLRON, Xavier, 1120 Wien (AT); FABOZZI, Gabriele, 1030 Wien (AT)
(74) Representative: Bak, Poul Erik

(57) **Abstract**

1. A method of determining (1000) a wind speed (110) experienced by a wind turbine generator (WTG) comprising a rotor (40) and at least one blade (50), the method (1000) comprising steps of:
- providing (1100) a binned wind speed distribution (114) at or near the wind turbine generator (WTG);
- providing (1100) a historic time series data (120) of pitch angle (100) of the at least one blade (50) and the revolutions per minute of the rotor (40);
- binning (1200) the historic time series data (120) into center points (121) matching the binned wind speed distribution (114);
- measuring (1300) pitch angle (100) of the at least one blade (50) and the revolutions per minute of the rotor (40); and
- determining (1400) a wind speed (110) experienced by the at least one blade (50) as a function of the center points (121), the measured pitch angle (100) and the revolutions per minute of the rotor (40).

## Description

### Field of the Invention

The present invention relates to a method of determining a wind speed experienced by a wind turbine generator using revolutions per minute (RPM) and pitch angle of said wind turbine generator.

### Background of the Invention

The operation of wind turbine generators benefits from information concerning operational conditions. It would be obvious to state that wind characteristics such as wind speed and other wind characteristics are important operational and performance conditions and parameters to a wind turbine.

A plethora of diagnostics exists to assess the operational conditions that a wind turbine generator might experience during operation. Anemometers placed on site or on the nacelle are just examples. Lidar systems placed on site or on the wind turbine constitute other such examples.

WO2022/064038 describes a method for determining a wind speed using vibrations data collected from the blades of the wind turbine generator. However, vibration data is not always available as the blades does not have an accelerometer or vibration sensor. Thus, there is a need for a method and a system, which can determine the wind speed without vibration data. Furthermore, tests have shown that for some turbines the vibration-only approach is insufficient, thus there is need for an alternative.

### Object of the Invention

The object is to improve and provide a method capable of determine wind speed experienced by a wind turbine blade using revolutions per minute (RPM) and pitch angle

It is a purpose to use as little instrumentation as possible over the lifetime of a wind turbine generator.

### Description of the Invention

An object is achieved by a method of determining a wind speed experienced by a wind turbine generator comprising a rotor and at least one blade. The method comprising steps of:
- providing a binned wind speed distribution at or near the wind turbine generator;
- providing a historic time series data of pitch angle and of the at least one blade and the revolutions per minute of the rotor;
- binning the historic time series data into center points matching the binned wind speed distribution;
- measuring pitch angle of the at least one blade and the revolutions per minute of the rotor; and
- determining a wind speed experienced by the at least one blade as a function of the center points, the measured pitch angle and the revolutions per minute of the rotor.

Thereby, the wind speed experienced by the wind turbine generator can be determined using the center points, the measured pitch angle and the revolutions per minute of the rotor. Thus, the wind speed can be determined without an expensive lidar an anemometer.

The step of providing binned wind speed distribution can be provided by analysing satellite images, or a weather station or lidar data. The binned wind speed distribution is preferably based on 1 year of data such that the data include season variations.

In some cases, the historic wind speed data is provided and in these cases the step of providing may include a step of binning the historic wind speed data into a binned wind speed distribution.

The historic time series data of the pitch angle and of the at least one blade and the revolutions per minute of the rotor is preferably measured from the wind turbine generator which is used for determining the wind speed. This is however not always possible, for example for the first year of operation there would not be historic time series data of the pitch angle and of the at least one blade.

Thus, historic time series data from other wind turbine generators can be used, such as
- another wind turbine generator from the same wind turbine farm; or
- wind turbine generator of the same type; or
- a plurality of wind turbine generator of the same type; or
- a wind turbine generator having the same type of blades.

The list above is not exhaustive. The listed examples of the historic time series data will cause the method to determine the wind speed with less precision compared to having historic time series data of the actual wind turbine generator performing the step of measuring pitch angle of the at least one blade and the revolutions per minute of the rotor.

The step of binning the historic time series data into centre points matching the binned wind speed distribution can be performed using various different algorithms as the end result, the binning, is important and it is important that the binning matches the binned wind speed distribution.

The algorithm for binning can be based on a travelling salesman algorithm.

The algorithm for binning can be selecting a number of neighboring data points, wherein the number corresponds to a bin of the wind speed distribution and wherein the centre point of the number of neighboring data points is the center of mass of the number of neighboring data points.

The step of measuring pitch angle of the at least one blade and the revolutions per minute of the rotor can be performed using sensors such as accelerometers, or a system as described in EP3430255, or a SCADA system.

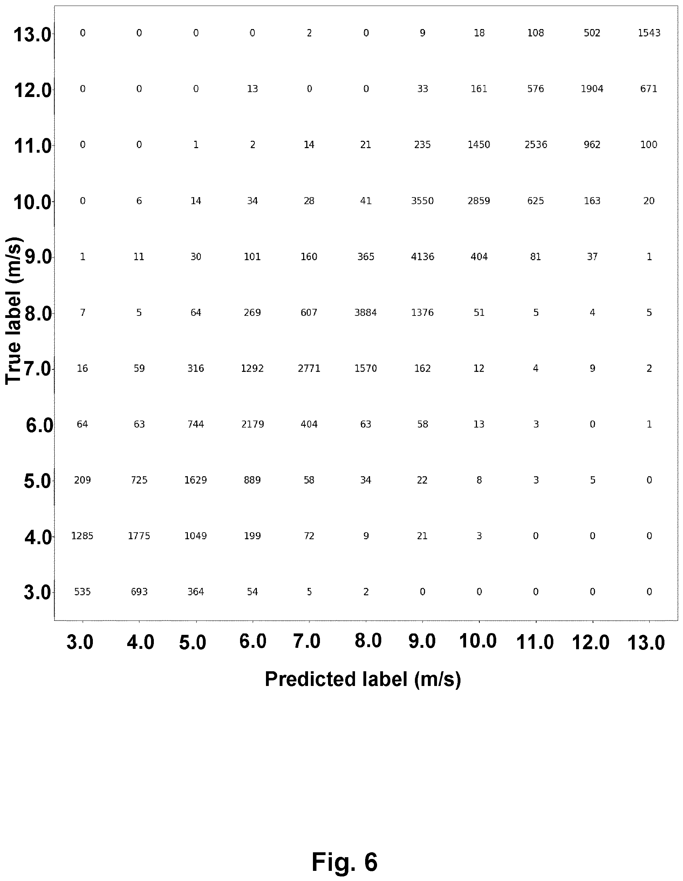

Figure 6 shows a confusion matrix, wherein the methods estimate (first axis - predicted label) is compared with wind speeds measured by a lidar (second axis - true label). The confusion matrix show that the confusion matrix is diagonal.

The method can be performed with pitch angle data from a single blade but data from two or all of blades can improve the method further.

In an embodiment the pitch angle and the revolutions per minute of the rotor is time synchronized and time stamped.

In an aspect, the method may comprise, prior to the step of binning, a step of averaging the historic time series data into metric data points, wherein the historic time series data is average over a pre-set period.

The historic time series data will typically contain 1 year of data points and thus to reduce the needed computation power the historic time series data is averaged into metric data points. This can be performed without loss in accuracy. A typical pre-set period for averaging is 1 minute but other periods can be used.

In an aspect, the pre-set period may be 0.5 min, 1 min, 2 min, 5 min, 10 min, 15 min or 30 min or between 0.5-30 min.

The pre-set period shall be chosen in view of the needed resolution of the wind speed results and the overall rate of change in wind speed at the wind turbine generator relative to the pre-set period. In theory the method works for pre-set period greater than 30 minutes but in many cases the rate of change will cause the overall change in wind speed to be too great for the data to be really useful. Thus, in most cases the pre-set period will be 15 minutes or less such as between 0.5 min and 5 min.

In an aspect, the step of determining may be performed by associating the measured pitch angle and the revolutions per minute of the rotor with the nearest center points.

This is a very simple method with little needed computation and the step has a high precision as the wind speed is determined to be the wind speed associated with the nearest center point.

In some embodiments, the step of determine includes interpolation between the two nearest center points.

In an aspect, the method may further comprise steps of
- training a machine learning model with metric points of labeled time series data and building a supervised machine learning model;
- verifying the supervised machine learning model by inputting a metric data point of labelled time series data to the supervised machine learning model and outputting a calculated data label and comparing the output with known wind speed data label;
and, wherein the step of determining is performed by inputting the metric point to the supervised machine learning model and outputting the wind speed data from the supervised machine learning model.

Labelling of data may generally be understood by a person skilled in the art. In the sense of the above-described supervised machine learning labelling may be performed as here described. As will be outlined, then for the supervised machine learning labelled data is needed. Labelled data is data where the output value of the data is already known in advance, e.g. wind speed or turbulence intensity from a LiDAR for example, in order to train and test the system. The labelled data is not limited to a lidar and anemometers or weather station may be used.

In an aspect, the method may further comprise steps of
- training a machine learning model with metric points of unlabeled data points and building an un-supervised machine learning model by:
   - grouping metric data points using a K-mean algorithm to a number of metric groups;
   - associating the formed metric groups with wind speed distribution, the specific wind turbine blade and corresponding pitch angle sensor and rotation sensor;
- verifying the un-supervised machine learning model by;
   - inputting a metric point to the un-supervised machine learning model and outputting the wind speed data from the un-supervised machine learning model; and,
wherein the step of determining is performed by inputting the metric point to the un-supervised machine learning model and outputting the wind speed data from the un-supervised machine learning model.

In this embodiment the machine learning model will train itself based on the data. The machine learning model may be able to achieve higher precision than the step of determining described in claim 4 but the machine learning model requires a greater computation power and may require additional data.

An object is achieved by a method of operating a wind turbine generator as a function of the wind speed determined by the method of determining a wind speed experienced by a wind turbine generator comprising a rotor and at least one blade.

The method of operating the wind turbine generator is not limited to only using the wind speed and many other parameters may be used by the method for operating he wind turbine generator. The other parameters may be information regarding wake or information regarding weather conditions such as rain, heavy rain or hail or other parameters as this is a non-exhaustive list.

An object is achieved by a wind turbine generator comprising at least one pitch angle sensor and a rotation sensor and means to perform the steps of the method of determining a wind speed experienced by a wind turbine generator comprising a rotor and at least one blade or the method of operating a wind turbine generator.

Thereby, the wind turbine generator is transformed into a large anemometer, which determines the wind speed experienced by the rotor and blades of the wind turbine generator.

The present invention is not limited to a specific type of pitch angle sensor and the method still function even if the pitch angle sensor is offset relative to the true pitch angle, then the method still functions as historic time series data is used and the offset will be true for the entire historic time series data.

The present invention is not limited to a specific type of rotation sensor for measuring the revolutions per minute of the rotor. The skilled person would be able to choose a suitable sensor. The rotation sensor may be an integrated part of the rotor or the rotor directedly provide the revolutions per minute in which case the rotor is seen as the rotation sensor.

An object is achieved a wind farm comprising
- a plurality of wind turbine generators, wherein each of the plurality of wind turbine generators comprises at least one pitch angle sensor and a rotation sensor,
- a controller receiving from each of the plurality of wind turbine generators sensory data from the pitch angle sensors and the rotation sensors, wherein the controller comprises the means for to perform the steps of the method of determining a wind speed experienced by a wind turbine generator comprising a rotor and at least one blade.

The controller is thereby able to determine the wind speed experience for each of the wind turbine generators forming part of the wind farm. Thereby, the controller determines a number of wind speed for the farm. Thus, if a single wind speed determined from one of the wind turbines generators is a clear outlier relative to the neighboring wind turbine generators and/or relative to upstream wind turbine generators, then this outlier can be excluded.

Furthermore, if several wind turbine generators upstream have determined a wind speed of 12 m/s, then it is unlikely that a downstream wind turbine generator is correct when the downstream wind turbine generator determines the wind speed to be 6 m/s. This determined wind speed may then be excluded when taking any action related to operating the wind farm.

In an embodiment, the pitch angle measured from the pitch angle sensors and the revolutions per minute of the rotor measured from rotation sensor are time synchronized and timestamped such that the wind speed can be compared across the entire wind farm.

In an aspect, the controller further operates the wind farm as a function of the determined wind speed at the plurality of wind turbine generators. Thereby, the wind farm can be operated more efficiently without a need for an expensive lidar or similar equipment.

An object is achieved a computer program product comprising instructions to cause the wind turbine generator or the wind farm.

An object is achieved a computer-readable medium having stored thereon the computer program.

### Description of the Drawing

Embodiments of the invention will be described in the figures, whereon:
Fig. 1 illustrates a wind turbine generator;
Fig. 2 illustrates a method of determining a wind speed experienced by a wind turbine generator;
Fig. 3 illustrates a graph disclosing relation between revolutions per minute, pitch angle and wind speed;
Fig. 4 illustrates a graph wherein data points of the graph in figure 3 has been binned to centre points;
Fig. 5 illustrates the binning the historic time series data into center points; and
Fig. 6 illustrates a confusion matrix.

### Detailed Description of the Invention

| **Item** | **No** |
|---|---|
| Wind turbine generator | WTG |
| Rotor | 40 |
| Tower | 42 |
| Nacelle | 44 |
| Blade | 50, 50A, 50B, 50C |
| Pitch angle sensor | 52, 52A, 52B, 52C |
| Rotation sensor | 54 |
| Controller | 70 |
| Pitch angle | 100 |
| Revolutions per minute (RPM) | 102 |
| Wind speed | 110 |
| Wind speed distribution | 113 |
| Binned wind speed distribution | 114 |
| Historic time series data | 120 |
| Center points | 121 |
| Method of determining | 1000 |
| Providing | 1100 |
| Binning | 1200 |
| Measuring | 1300 |
| Determining | 1400 |
| Averaging | 1500 |

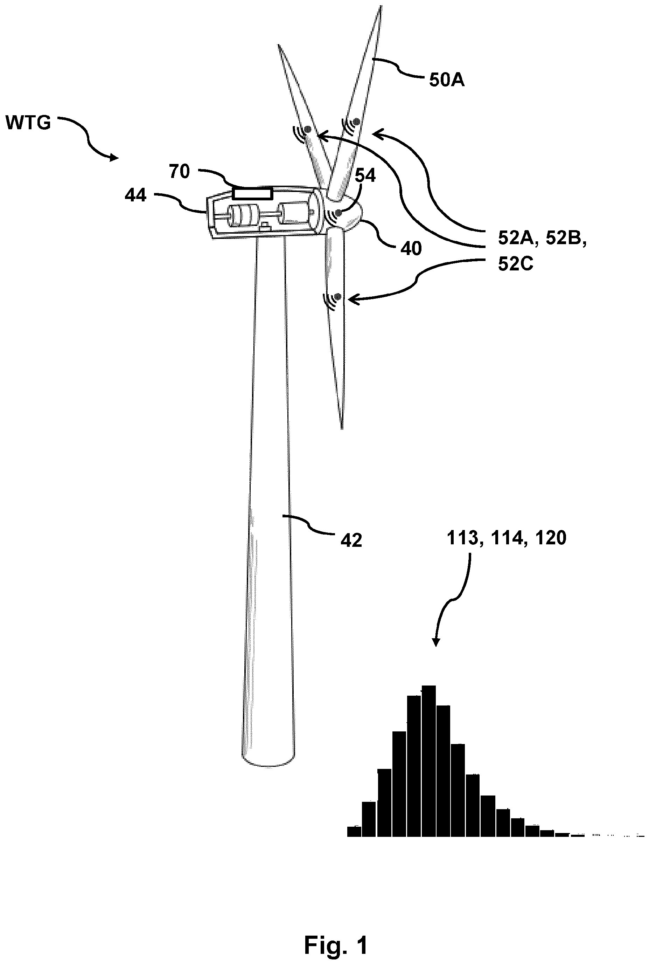

Fig. 1 illustrates a wind turbine generator WTG. The wind turbine generator WTG comprises a tower 42 with a nacelle 44, rotor 40 and three wind turbine blades 52A, 52B, 52C.

The wind turbine generator WTG is further equipped with three pitch angle sensors 52A, 52B, 52C. The position of the pitch angle sensors 52A, 52B, 52C in the figure is solely for illustration purposes as the pitch angle sensors 52A, 52B, 52C may be positioned differently. Likewise, the rotation sensor 54 does not need to be positioned in the rotor 54.

The historic time series data 120 of the wind speed near this wind turbine generator WTG has been binned into a binned wind speed distribution 113, 114 as shown. The historic time series data 120 may be data from a local weather station near the historic time series data 120 or from a neighbouring wind turbine generator WTG which may have an anemometer or lidar or from other sources.

The wind turbine generator WTG has a controller 70 for receiving sensor data and for determining a wind speed 110 experienced by the at least one blade 50 as a function of center points 121, the measured pitch angle 100 and the revolutions per minute 102 of the rotor 40. The controller 70 is positioned in the nacelle 44, however it could be external to the WTG or be part of server receiving sensory data from a plurality of wind turbine generators WTGs.

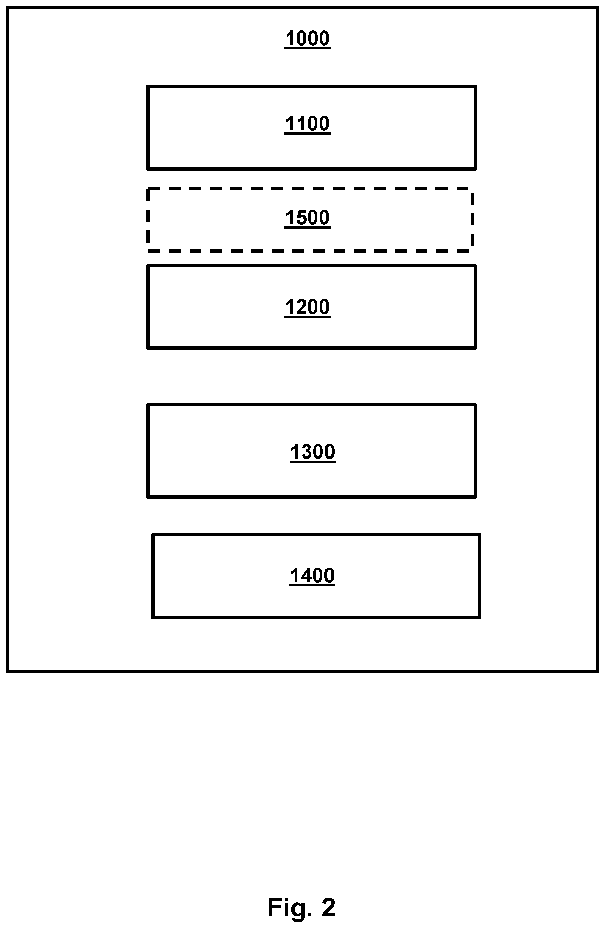

Fig. 2 illustrates a method 1000 of determining a wind speed 110 experienced by a wind turbine generator WTG.

The method 1000 comprises a step of providing 1100 a binned wind speed distribution 114 at or near the wind turbine generator WTG from any suitable source.

The method 1000 comprises a step of providing 1100 historic time series data 120 of pitch angle 100 of the at least one blade 50 and the revolutions per minute 102 of the rotor 40.

The method 1000 comprises a step of binning 1200 the historic time series data 120 into center points 121 matching the binned wind speed distribution 114. Thus, if the first bin of the binned wind speed distribution 114 comprises 3 % of the total population, then 3 % of data points of the historic time series data 120 is binned into one centre point 121. The position of the one centre point 121 may be the center of mass of the 3 % of data points.

The method may comprise, prior to the step of binning 1200, a step of averaging 1500 the historic time series data 120 into metric data points, wherein the historic time series data 120 is average over a pre-set period.

The method 1000 comprises a step of measuring 1300 pitch angle 100 of the at least one blade 50 and the revolutions per minute 102 of the rotor 40. In an embodiment the pitch angle 100 and the revolutions per minute 102 of the rotor 40 is time synchronized and time stamped.

The method 1000 comprises a step of determining 1400 a wind speed 110 experienced by the at least one blade 50 as a function of the center points 121, the measured pitch angle 100 and the revolutions per minute of the rotor 40.

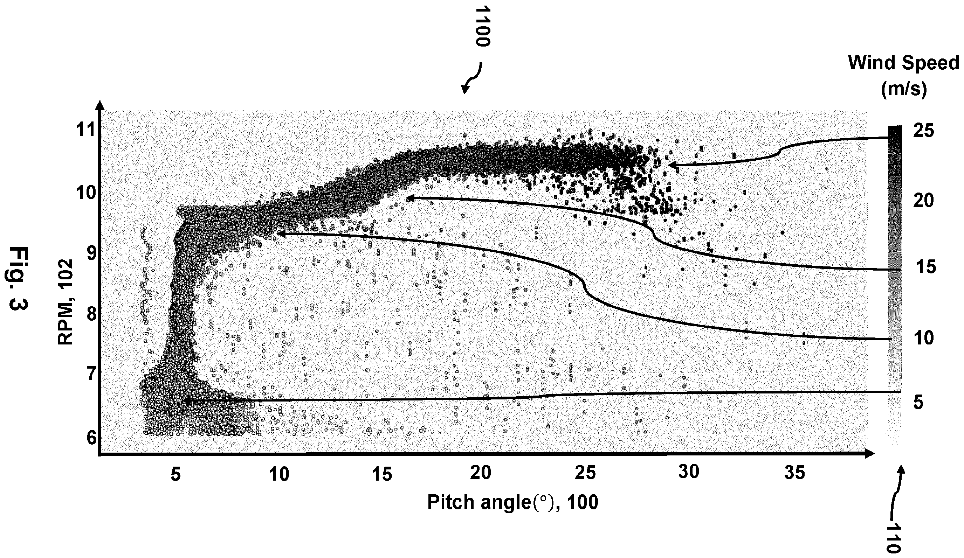

Fig. 3 illustrates a graph disclosing relation between revolutions per minute 102, pitch angle 100 and wind speed 110 measured at a wind turbine generator WTG. The wind speed 110 was measured by a lidar to verify the method 1000 according to the invention. The individual metric points are the historic time series data 120 and each point represents an average over one minute. The wind speed is represented by a grey scale and arrows between a wind speed value and a specific area in the graph having a high concentration of these measurements. Most of the metric points from a continuously band of metric points where the metric points at 6-7 RPMs and 5-10 degrees is mostly white (i.e. wind speed 110 is low) to 11 RPM and 25 degrees, where the wind speed 110 is high ~20-25 m/s.

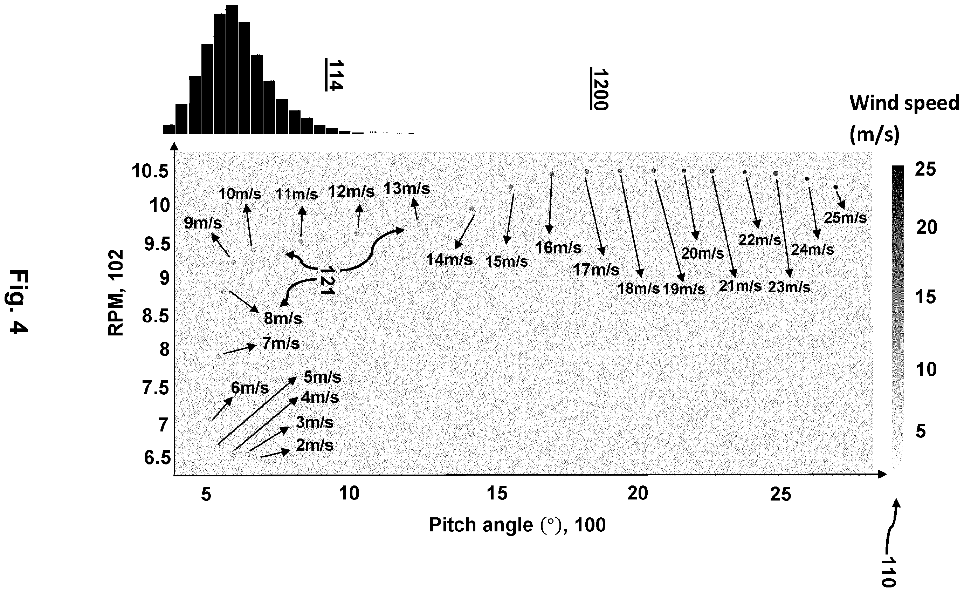

Fig. 4 illustrates a graph wherein data points of the graph in figure 3 has been binned 1200 to centre points 121. The data points or metric points are binned 1200 such that the distribution matches the distribution of the binned wind speed distribution 114. A wind speed 110 for a data point may afterwards be determined 1400 by finding the closest centre point 121 which is associated with a specific wind speed 110.

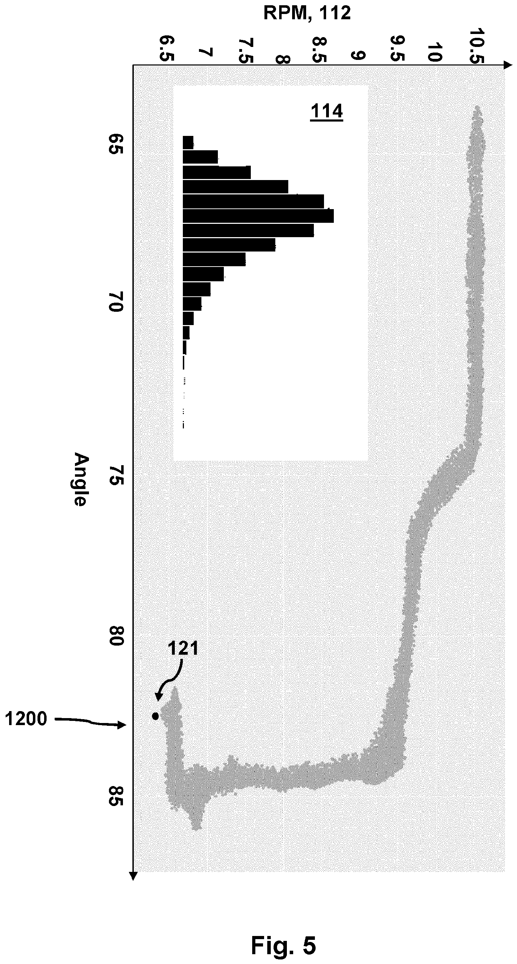

Fig. 5 illustrates the binning 1200 of the historic time series data into center points 121. The graph is the same graph shown in figure 3, however the first axis is (90 - pitch angle). The binning 1200 may be performed by the center point 121 absorbing data points unit the first center point 121 has a number of data points matching the first column of the binned wind speed distribution 114. Then a second center point 121 will begin absorbing data points until the second centre point 121 matches the second column of the binned wind speed distribution 114 and so on.

Fig. 6 illustrates a confusion matrix showing the determined wind speeds 110 by the method 1000 according to the present invention along the first axis, while wind speeds measured by a lidar is along the second axis. The confusion matrix is clearly diagonal, thus the method 1000 can be used for determining wind speeds 110.

## Claims

1. A method of determining (1000) a wind speed (110) experienced by a wind turbine generator (WTG) comprising a rotor (40) and at least one blade (50), the method (1000) comprising steps of:
- providing (1100) a binned wind speed distribution (114) at or near the wind turbine generator (WTG);
- providing (1100) a historic time series data (120) of pitch angle (100) of the at least one blade (50) and the revolutions per minute of the rotor (40);
- binning (1200) the historic time series data (120) into center points (121) matching the binned wind speed distribution (114);
- measuring (1300) pitch angle (100) of the at least one blade (50) and the revolutions per minute of the rotor (40); and
- determining (1400) a wind speed (110) experienced by the at least one blade (50) as a function of the center points (121), the measured pitch angle (100) and the revolutions per minute of the rotor (40).

2. A method according to claim 1, wherein the method comprises, prior to the step of binning (1200), a step of averaging (1500) the historic time series data (120) into metric data points, wherein the historic time series data (120) is average over a pre-set period.

3. A method according to claim 2, wherein the pre-set period is 0.5 min, 1 min, 2 min, 5 min, 10 min, 15 min or 30 min or between 0.5-30 min.

4. A method according to anyone of claims 1-3, wherein the step of determining (1400) is performed by associating the measured pitch angle (100) and the revolutions per minute of the rotor (40) with the nearest data point.

5. The method (1000) according to anyone of claims 1-4, further comprising steps of
- training a machine learning model with metric data points of labeled time series data and building a supervised machine learning model;
- verifying the supervised machine learning model by inputting a metric data point of labelled time series data to the supervised machine learning model (210) and outputting a calculated data label and comparing (1710) the output with known wind speed data label; and,
wherein the step of determining (1400) is performed by inputting the metric data point to the supervised machine learning model and outputting the wind speed data from the supervised machine learning model.

6. The method (1000) according to anyone of claims 1-4, further comprising a step of
- training a machine learning model with metric data points of unlabeled data points and building an un-supervised machine learning model by:
- grouping metric data points using a K-mean algorithm to a number of metric groups;
- associating the formed metric groups with wind speed distribution, the specific wind turbine blade (50A) and corresponding pitch angle sensor (52) and rotation sensor (54);
- verifying the un-supervised machine learning model by;
- inputting a metric data point to the un-supervised machine learning model and outputting the wind speed data from the un-supervised machine learning model; and,
wherein the step of determining (1400) is performed by inputting the metric data point to the un-supervised machine learning model and outputting the wind speed data from the un-supervised machine learning model.

7. A method of operating a wind turbine generator (WTG) as a function of the wind speed (110) determined by the method (1000) of any one of claims 1 to 6.

8. A wind turbine generator (WTG) comprising at least one pitch angle sensor (52) and a rotation sensor (54) and means to perform the steps of the method according to any one or more of claims 1 to 6 or the method according to claim 7.

9. A wind farm comprising
- a plurality of wind turbine generators (WTG), wherein each of the plurality of wind turbine generators (WTG) comprises at least one pitch angle sensor (52) and a rotation sensor (54),
- a controller (70) receiving from each of the plurality of wind turbine generators (WTG) sensory data from the pitch angle sensors (52) and the rotation sensors (54), wherein the controller (70) comprises the means for to perform the steps of the method (1000) according to anyone or more of claims 1 to 6.

10. A wind farm (60) according to claim 9, wherein the controller (70) further operates the wind farm (60) as a function of the determined wind speed at the plurality of wind turbine generators (WTG).

11. A computer program product comprising instructions to cause the wind turbine generator according to claim 8 or the wind farm according to claims 9-10.

12. A computer-readable medium having stored thereon the computer program of claim 11.
